# EUROPEAN PATENT APPLICATION

(11) **EP 1 988 338 A1**
(43) Date of publication of application: **05.11.2008**
(21) Application number: 08154981.8
(22) Date of filing: 23.04.2008
(51) Int. Cl.: F23R 3/06, B23P 15/00

(54) **Systems and methods for installing cooling holes in a combustion liner**

(30) Priority: 30.04.2007 US 742197
(71) Applicant: GENERAL ELECTRIC COMPANY, Schenectady, NY 12345 (US)
(72) Inventor: Cleary, Mark James, Powder Springs, GA 30127 (US)
(74) Representative: Bedford, Grant Richard

(57) **Abstract**

A system and method for modification of cooling holes in a combustion liner to prevent cracking. The invention includes a portable combustion liner modification system for a gas turbine able to allow for the correct placement of cooling holes on the combustion liner preventing cracks from forming around a mixing hole 30.

## Description

The present application relates generally to gas turbines and more particularly relates to a system and method for modification of cooling holes in a combustion liner to prevent cracking.

Generally described, gas turbine engines include a compressor for compressing incoming air, a combustor for mixing fuel with the compressed air and to ignite the fuel and the air to form a high temperature gas stream, and a turbine that is driven by the high temperature gas stream. Other components also may be used herein. A combustion liner is used as a chamber that contains the combustion process that occurs in the turbine for power generation. Combustion liners contain a mixing hole which is an orifice that allows air to enter the combustion liner and mix with the fuel gas to create the correct fuel to air ratio in the turbine.

However, combustion liners may develop premature cracks around the mixing hole location. This is typically caused by the lack of correctly placed cooling holes in the liner. Known methods of modifying the combustion liners require that the liners be shipped from the customers to outside service vendors to have the correct holes added to the combustion liner. This creates a rather large cost to the customer due to down time of the turbine, as well as shipping and customs charges required for the shipping of the combustion liners. A typical off-site repair time may leave the customer without essential parts for one to three weeks.

There is a desire, therefore, for a system that eliminates the necessity to ship combustion liners in order to correctly modify the cooling holes which prevent the cracking of the combustion liner. Such a modification system should be portable so that it may be shipped to the customer such that costs are lower and turbine down time is lessened.

The present application thus provides a portable combustion liner modification system for a gas turbine able to allow for the correct placement of cooling holes on the combustion liner preventing cracks from forming around the mixing hole. The combustion liner modification system may consist of a fixture composed of an aluminum material or other suitable material such as an alloy that will not react with the combustion liner material.

The bottom surface of the fixture is next molded to follow the contours of the combustion liner. Cooling hole locations are then drilled into the fixture at the proper locations of cooling hole for the combustion liner. The present application further describes an embodiment in which bushings are installed into the drilled cooling hole locations.

These and other features of the present application will become apparent to one of ordinary skill in the art upon review of the following detailed description of the several embodiments when taken in conjunction with the drawings, in which:
Fig 1A is a front view of a cooling hole modification system according to an embodiment of the present invention.
Fig 1B is a side view of a cooling hole modification system according to an embodiment of the present invention.
Fig. 2 is a flowchart depicting operation of a method according to an embodiment of the present invention.

Various aspects of the present invention now will be described more fully hereinafter with reference to the accompanying drawings, in which some, but not all embodiments of the invention are shown. Indeed, these may be embodied in many different forms and not be construed as limited to the embodiments set forth herein; rather, these embodiments are provided so that this disclosure will satisfy applicable legal requirements. Like numbers refer to like elements throughout.

Certain embodiments of the present invention are described below with reference to block diagrams and flowchart illustrations of systems, methods, apparatuses and computer program products according to an embodiment of the invention. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, CAD systems or other programmable data processing apparatus to produce a machine, such that the instructions which execute on the computer or other programmable data processing apparatus create means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

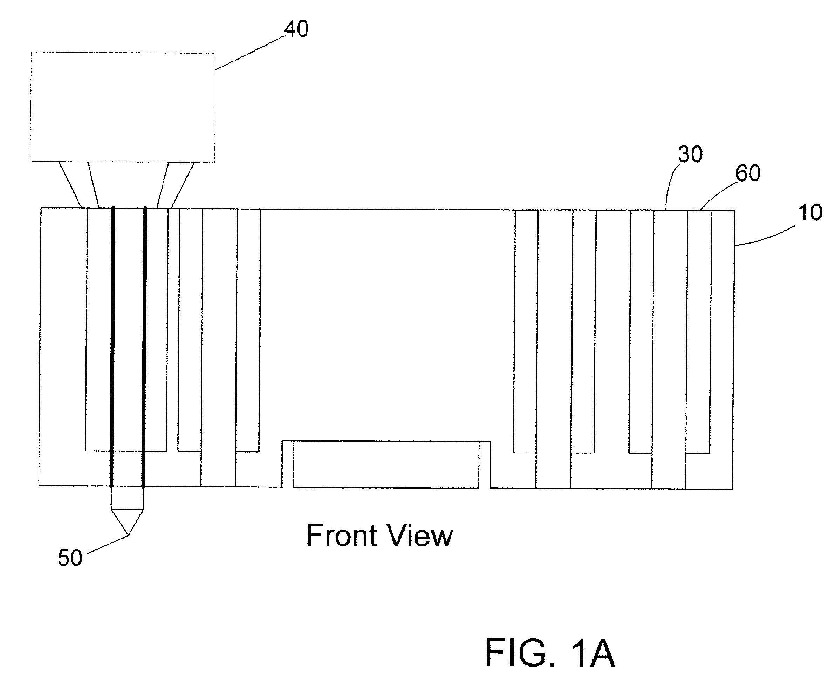

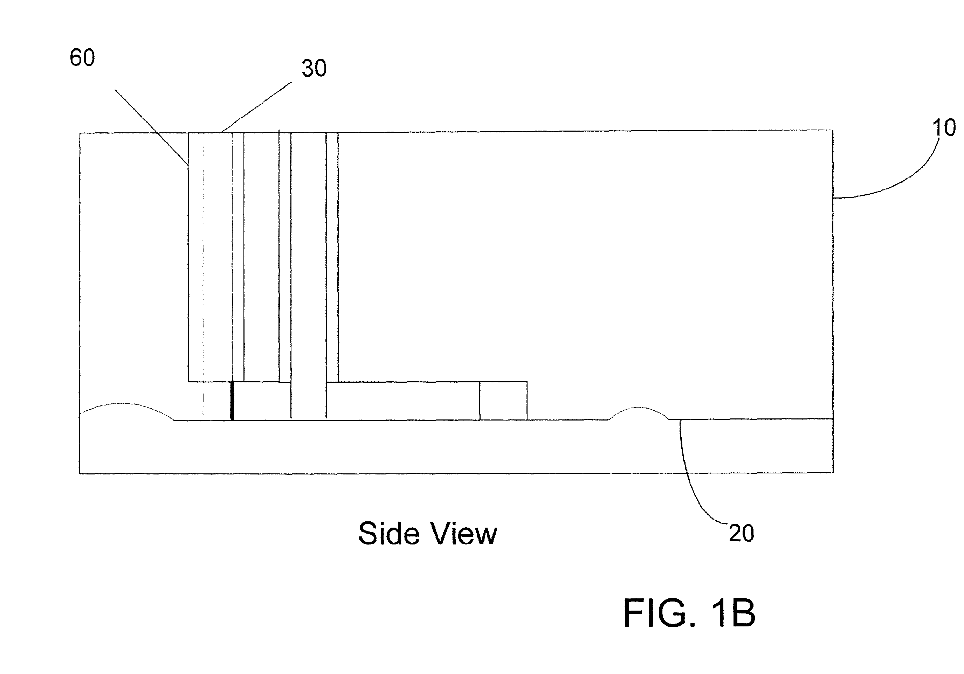

Referring now to the drawings, in which like numerals refer to like elements throughout the several views, Figs. 1A - 1B show a fixture 10 according to an embodiment of the present invention. The fixture 10 may be fabricated out of a single material or a composition of materials that will not impact or react with the liner material either mechanically, chemically, electrically, or perform any change to the fit, form, function, or composition of the liner. The fixture 10 may be comprised of a mechanically stable material such as aluminum, steel, cast aluminum, cast steel, epoxy, carbon fiber/resin mixtures, or other suitable material such as an alloy that will not react with the combustion liner material.

The fixture 10 may be fabricated through any of the following processes: molding, resin forming, machining (tooling, water jet, etc), laser molding, vacuum forming, casting, or other suitable fabrication methods. Regardless of the manner of fabrication, the fixture 10 must follow the specific contour 20 of the liner so as not to allow movement during liner cooling hole creation.

The cooling hole locations 30 are determined by means of computer aided, mechanical or manual positioning that will begin at the top surface of the fixture 10 and continue through to the bottom surface of the fixture 10 so as to allow cooling holes to be added to the combustion liner in precise location. The cooling holes may be bored using a drill 40 with properly sized drill bit 50 or any other device suitable for boring through the fixture 10. The diameter of the cooling holes are dependant on the specific engineered drawing reference size as well as a tolerance to insert a bushing 60 into each cooling hole location 30.

Bushings 60 may then be installed into the cooling hole locations 30. The bushings 60 are employed as a guide for the drill 40 or other instrument that will create the cooling holes in the combustion liner. To ensure that the cooling hole locations 30 have been properly located, the fixture 10 may be fitted on to a previously correctly drilled combustion liner to determine correct alignment.

After the fixture 10 is shipped to a customer, the fixture 10 is fitted on a combustion liner in need of modification. The fixture 10 is oriented on the combustion liner based on the contour fit which allows the holes to be drilled in the correct location. Once the holes are drilled the combustion liner in need of modification will be modified correctly to avoid cracking around the mixing hole.

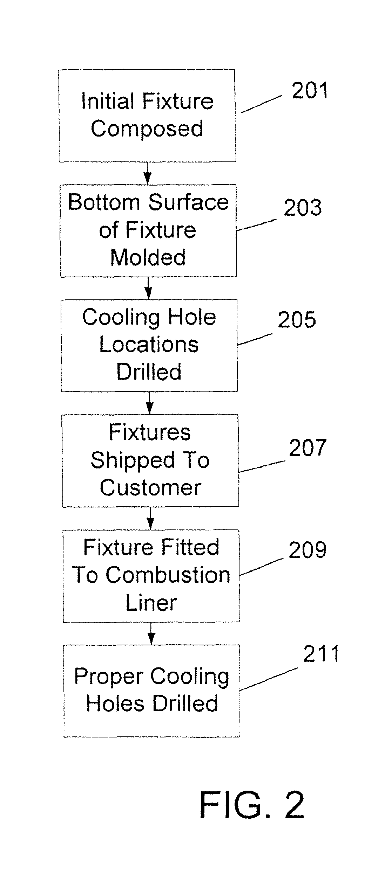

Fig. 2 describes the operation of a method to modify a combustion liner according to an embodiment of the present invention. The method starts at step 201 wherein a fixture 10 is composed of a material that will not react with the material of which the combustion liner is made. In certain embodiments of the present invention this material will be an aluminum compound.

The method next proceeds to step 203, wherein the bottom surface of the fixture 10 is fitted to follow the contours 20 of the combustion liner. In one embodiment, this may be accomplished by basing a molding on a correctly drilled combustion liner corresponding to the model requiring modification. After the completion of step 203, the method proceeds to step 205.

At step 205, cooling hole locations 30 are placed through the fixture 10. The cooling hole locations 30 correspond to the proper locations of cooling holes on a correctly drilled combustion liner.

The method next proceeds to step 207, wherein the fixture 10 may be shipped to a customer who requires modification of a combustion liner of the type the fixture 10 was designed to correspond to. The method next proceeds to step 209 where the customer may fit the fixture 10 on the combustion liner requiring modification. This is accomplished by lining up the contour lines 20 on the fixture to the contours of the combustion liner.

Finally, the method proceeds to step 211, where the customer or other individual may place proper cooling holes into the combustion liner in need of modification. In one embodiment, this may be accomplished by drilling through the combustion liner at the cooling hole locations on the fixture. In an alternate embodiment of the present invention, bushings are installed into the cooling hole locations 30 prior to shipment of the fixture 10 to the customer to facilitate drilling.

It should be apparent that the foregoing relates only to the preferred embodiments of the present application and that numerous changes and modifications may be made herein by one of ordinary skill in the art without departing from the general spirit and scope of the invention as defined by the following claims and the equivalents thereof.

## Claims

1. A modification system for a gas turbine combustion liner, comprising:
a fixture (10) composed of a material that will not react with the combustion liner material;
wherein the bottom surface of the fixture follows the contours (20) of the combustion liner;
cooling hole locations (30) placed into the fixture corresponding with proper location of cooling holes on the combustion liner.

2. The modification system of claim 1, wherein the fixture (10) is comprised of an aluminum material.

3. The modification system of any preceding claim, wherein bushings (60) are set into the cooling hole locations (30).

4. A method of modifying a gas turbine combustion liner comprising:
preparing a fixture composed of a material that will not react with the combustion liner material;
wherein the bottom surface of the fixture follows the contours of the combustion liner;
placing cooling hole locations into the fixture corresponding with proper location of cooling holes on the combustion liner;
fitting the fixture on the combustion liner; and
placing cooling holes into the combustion liner through the cooling hole locations (30) in the fixture.

5. The method of claim 4, wherein the fixture (10) is comprised of an aluminum material.

6. The method of claim 4 or claim 5, further including the step of setting bushings (60) into the cooling hole locations (30).
